# EUROPÄISCHE PATENTANMELDUNG

(11) **EP 4 670 939 A1**
(43) Veröffentlichungstag der Anmeldung: **31.12.2025**
(21) Anmeldenummer: 24185007.2
(22) Anmeldetag: 27.06.2024
(51) Int. Cl.: B27N 3/02, B27J 5/00, B27N 3/08, B27N 5/00, B27N 7/00, B27N 9/00, B27K 7/00, B27N 3/18, B27N 3/20, B32B 21/02, B32B 21/08, B32B 21/14, C08L 97/00

(54) **KORK-PRODUKT**

(71) Anmelder: Blomberger Holzindustrie GmbH, 32825 Blomberg (DE)
(72) Erfinder: Kobrock, Andreas, 33034 Brakel (DE); Fitz, Dominik, 30171 Hannover (DE)
(74) Vertreter: Kalkoff & Partner Patentanwälte mbB

(57) **Zusammenfassung**

Die Erfindung betrifft ein Verfahren zum Herstellen eines Kork-Produkts.

Um einen thermisch isolierenden und brandbeständigen Werkstoff, insbesondere einem solchen Werkstoff, der einfach herstellbar ist, bereitzustellen, ist vorgesehen, dass das erfindungsgemäß durch Komprimieren des Korks um mindestens 50% bezogen auf das Ausgangsvolumen hergestellte Kork-Produkt eine Dichte von mindestens 1.050 kg/m³ aufweist. Die Erfindung betrifft weiter das Kork-Produkt und dessen Verwendung.

## Beschreibung

Die Erfindung betrifft ein Verfahren zum Herstellen eines Kork-Produkts und das Kork-Produkt sowie die Verwendung des Kork-Produkts.

Kork ist ein vielfältig eingesetztes allein und in Verbund-Werkstoffen eingesetztes Material, das aufgrund seiner Dämm- bzw. Isoliereigenschaft in Verbindung mit dem leichten Gewicht geschätzt wird. Kork wird aber auch in komprimierter Form angeboten, unter anderem, um die mechanische Belastbarkeit und Handhabbarkeit zu verbessern, so z. B. als Deckschicht in Fußbodenbelägen mit einer Dichte von 450 kg/m³ bis 600 kg/m³, wie in der EP 3 444 110 A1 offenbart, oder als Trägerplatte für ein Fußbodenelement mit einer Dichte von 600 kg/m³ bis 900 kg/m³, wie in der DE 10 2012 112 562 B4 offenbart.

Kork wird auch in thermisch isolierenden Produkten eingesetzt; dies wird z. B. in der EP 3 822 072 A1 erläutert, die sich mit einem feuerbeständigen und thermisch isolierenden Werkstoff befasst, der auch Kork aufweist. Aktuell ist ein typisches Anwendungsgebiet für solche feuerbeständigen und thermisch isolierenden Werkstoffe das Abdecken bzw. Einhausen von elektrischen Batterien oder Akkumulatoren.

Es besteht Bedarf an einem thermisch isolierenden Werkstoff, insbesondere einem solchen Werkstoff, der einfach herstellbar ist.

Die Lösung für die Bereitstellung eines solchen Werkstoffs ergibt sich durch ein Verfahren nach Anspruch 1 und dem Kork-Produkt nach Anspruch 10 sowie dessen Verwendung nach Anspruch 15.

Es hat sich überraschend herausgestellt, dass ein Verfahren zum Herstellen eines Kork-Produkts mit einer Dichte von mindestens 1.050 kg/m³ durch Komprimieren des Korks um mindestens 50% bezogen auf das Ausgangsvolumen ein thermisch isolierendes Kork-Produkt bereitstellt.

Das Kork-Produkt, das durch Komprimieren von Kork hergestellt wird, ist thermisch isolierend. Wird es in Verbindung mit anderen Werkstoffen, z. B. als Sandwich-Platte oder als 3-D-Sandwich-Werkstoff eingesetzt, so kann es nach den Ergebnissen von zwei verschiedenen Tests, die zur Prüfung von u. a. Batterieabdeckungen von elektrischen Batterien bzw. Akkumulatoren eingesetzt werden, bevorzugt als Brandschutzmaterial eingesetzt werden. Zwei Tests sollen Brandschutzmaterialien daraufhin prüfen, ob sie einer Entgasung einer oder mehrerer Batteriezellen standhalten, indem untersucht wird, ob sie dem Ausstoß von Brandgasen mit einer Temperatur von ca. 1.300 °C bei gleichzeitigem druckvollem Ausstoß heißer Metallpartikel standhalten. Es wird also auch untersucht, wie sich das Brandschutzmaterial gegenüber einem abrasiven Verhalten bei der Zellentgasung verhält. Typische Werkstoffe, die in Verbindung mit dem erfindungsgemäßen Kork-Produkt zu einem Sandwich-Material gefügt werden können, das als Brandschutzmaterial geeignet ist, werden nachstehend beschrieben.

Das Ergebnis dieser Tests wird erfasst zur qualitativen Einschätzung des Brandschutzmaterials durch visuelle Einschätzung, durch die Erfassung eventueller Durchbrennzeit und Bewertung der Charakteristika eines eventuellen Durchbrandes sowie durch Ermittlung einer Temperatur-Zeit-Kurve. Geprüft werden Platten mit einer Abmessung von 25 cm x 25 cm bei Raumtemperatur. Raumtemperatur und Luftfeuchtigkeit sollten während der Messung erfasst werden. Die erste Versuchsanordnung (Gasbrenner-Test) sieht vor, dass ein Gasbrenner, der z. B. mit Butan bei einem Druck von 4 bar und Sauerstoff bei atmosphärischem Druck betrieben wird, und der eine Flammtemperatur von 1.200 °C aufweist, im 90° Winkel in einem Abstand von 65 mm auf ein zu prüfendes Brandschutzmaterial gerichtet ist. Der Abstand wird gemessen zwischen dem Auslass des Gasbrenners und der vorderen Oberfläche des zu prüfenden Brandschutzmaterials. Hinter dem Brandschutzmaterial, also auf der dem Gasbrenner abgewandten Seite, ist eine Wärmebildkamera (IR-Kamera) im Abstand von 1350 mm zur Rückseite des Brandschutzmaterials angeordnet. Die Flamme des Gasbrenners wird für 10 Minuten bei einer Temperatur von 1.200 °C auf das zu prüfende Brandschutzmaterial gerichtet. Die Temperatur der Rückseite des Brandschutzmaterials, die durch die Wärmebildkamera erfasst wird, darf während des 10-minütigen Tests 300 °C nicht überschreiten.

Der zweite Test, der Pyrotechnik-Test, sieht eine Versuchsanordnung vor, bei der ein pyrotechnischer Gegenstand aus 30 mm Entfernung in einem Winkel von 90° zum zu prüfenden Brandschutzmaterial abgeschossen wird. Innerhalb von 20 Sekunden nach Abschuss des pyrotechnischen Gegenstands darf die Temperatur der Rückseite des zu prüfenden Brandschutzmaterials, die von einer Wärmebildkamera (IR-Kamera) erfasst wird, 300 °C nicht überschreiten. Die Wärmebildkamera ist in einem Abstand von 1.150 mm zur Rückseite des Brandschutzmaterials angeordnet. Ein Durchbrennen des zu prüfenden Brandschutzmaterials darf ebenfalls nicht erfolgen.

Der pyrotechnische Gegenstand muss folgende Kriterien erfüllen: eine Leistung von 9 kW ± 1 kW, eine Austrittstemperatur von 1.300 °C ± 100 K, eine geringe Rauchentwicklung und eine Partikelmenge von mindestens 1,5 g/s. Ein Beispiel eines geeigneten pyrotechnischen Gegenstandes ist eine WECO Bühnen-Fontäne, Art. Nr. 4851.

Um die Eigenschaften des zu prüfenden Brandschutzmaterials vollständig zu erfassen, werden nacheinander so viele pyrotechnische Gegenstände auf das Brandschutzmaterial abgefeuert, bis ein Durchbrennen erreicht ist. Alternativ werden mehrere pyrotechnische Gegenstände gleichzeitig auf das zu prüfende Brandschutzmaterial abgefeuert.

Zur Prüfung darf das Brandschutzmaterial auf ein Referenz-Blech bzw. einen Referenz-Blechrahmen montiert werden; empfohlen wird ein Blech aus einer Aluminiumlegierung. Die verwendete Ausführung des Referenz-Blechs sollte im Prüfprotokoll vermerkt werden.

Ein nicht-komprimiertes oder bis zu einer Dichte von 600 kg/m³ komprimiertes Kork-Produkt, das in ein Brandschutzmaterial eingefügt wird, besteht weder den Gasbrenner-Test noch den Pyrotechnik-Test. Ein bis auf eine Dichte von 1.050 kg/m³ komprimiertes Kork-Produkt, das in ein Brandschutzmaterial eingefügt wird, besteht beide Tests.

Das erfindungsgemäße Verfahren kann vorteilhaft in der Weise durchgeführt werden, dass Kork, ausgehend vom Ausgangsvolumen, um mehr als 50% komprimiert wird, beispielsweise um beliebige Werte in einem Bereich von um 50% bis 85%, typisch um Werte von 60%, 65%, 70%, 75% oder 80%, jeweils bezogen auf das Ausgangsvolumen. Je stärker der Kork komprimiert wird, desto höher wird die Dichte des Kork-Produkts; sie beträgt zwischen 1.100 kg/m³ und 1.700 kg/m³, bevorzugt zwischen 1.200 kg/m³ und 1.500 kg/m³. Je höher die Dichte des Kork-Produkts, desto geringer kann die Schichtdicke sein, in der es eingesetzt wird. Dies wird nachfolgend näher erläutert.

Das Kork-Produkt wird zweckmäßig in einer Presse hergestellt. In der Presse können Platten, die in der Regel zweidimensional sind oder auch dreidimensionale Formen bzw. Kork-Produkte hergestellt werden, insbesondere, wenn Press-Formen eingesetzt werden. Optional können Platten, die eine zweidimensionale Form aufweisen, nach der Herstellung in begrenztem Umfang auch nachverformt werden. Wenn ein bevorzugt plattenförmiges Kork-Produkt oder Sandwich-Material zum Erzeugen eines dreidimensionalen Gegenstands in eine Press-Form eingesetzt wird, so kann eine Verformung aus der Ebene der Platte heraus in eine dritte Dimension bis zum 3-fachen, insbesondere bis zum 4-fachen der Dicke des Kork-Produkts bzw. des Sandwich-Materials erfolgen, ohne dass die Eigenschaften des Kork-Produkts bzw. des Sandwich-Materials wesentlich nachteilig beeinflusst werden. So kann also z. B. ein 1,5 mm dickes, plattenförmiges Kork-Produkt um bis zu 4,5 mm, vorteilhaft um bis zu 6 mm aus der ursprünglichen Plattenebene heraus verformt werden, beispielsweise um Vertiefungen oder Erhebungen wie Sicken oder Leisten aus dem plattenförmigen Kork-Produkt heraus zu formen.

Typische Pressebedingungen, die zum Herstellen des Kork-Produkts geeignet sind, umfassen ein Pressen bei mindestens 120 bar, insbesondere bei mindestens 150 bar, bevorzugt bei mindestens 180 bar. Nach oben ist der Pressdruck lediglich durch den maximalen Druck der jeweiligen Presse begrenzt. Weiter erfolgt das Komprimieren des Korks zu einem Kork-Produkt bevorzugt bei einer Temperatur von über 100 °C, insbesondere von mindestens 150 °C, vorteilhaft von einer Temperatur von mindestens 180 °C. Die Obergrenze der Temperatur ist begrenzt durch eine Temperatur, bei der Kork beginnt, sich thermisch zu zersetzen. Das Komprimieren von Kork erfolgt vorzugsweise über einen Zeitraum von mindestens 8 Minuten, insbesondere von mindestens 10 Minuten, besonders bevorzugt über einen Zeitraum von mindestens 15 Minuten. Ein typischer Presszyklus mit Öffnen der Presse, Einlegen des Materials, Schließen der Presse, Aufbauen des Drucks, Erhalten des Drucks und Abbauen des Drucks sowie ggf. Kühlen des Kork-Produkts dauert ca. 10 Minuten bis 30 Minuten.

Nach einer besonders bevorzugten Ausführung ist das Kork-Produkt ein Bestandteil eines mehrschichtigen Gegenstands, insbesondere eines Brandschutzmaterials oder eines Isoliermaterials mit dekorativer Oberfläche. Entsprechend wird durch das Komprimieren oder nach dem Komprimieren des Korks ein mehrschichtiger Gegenstand hergestellt, der ein Kork-Produkt aufweist. Der mehrschichtige Gegenstand kann eine Platte, insbesondere eine Verbund-Platte oder ein dreidimensionales Bauteil sein. Das Kork-Produkt kann an beliebiger Stelle des mehrschichtigen Gegenstands angeordnet sein. Bevorzugt wird das Kork-Produkt nicht als äußere Lage eingesetzt.

Vorteilhaft wird das Kork-Produkt auf beiden äußeren Oberflächen durch mindestens eine Außenlage aus einer anderen Material-Schicht abgedeckt, beispielsweise entweder um dem mehrschichtigen Gegenstand, z. B. einem Brandschutzmaterial, mehr mechanische Festigkeit zu verleihen oder um eine dekorative Oberfläche zu gestalten. Die Seiten des Kork-Produkts können symmetrisch oder asymmetrisch beschichtet sein, sowohl hinsichtlich der Anzahl der Schichten als auch der Auswahl des Materials, mit dem das Kork-Produkt beschichtet wird.

Besonders vorteilhaft weist das Kork-Produkt bzw. das Sandwich-Material auf mindestens einer Seite mehr als eine äußere Lage auf, z. B. eine erste, auf das Kork-Produkt aufgebrachte Lage aus einem Material, das die mechanische Festigkeit erhöht, beispielsweise ein Furnier, eine Lage Massivholz, eine Span-, Faser- oder Sperrholzplatte, eine Lage von Fasern aus Glas oder Mineral oder Kohlenstoff, ein Laminat wie z. B. ein High-Pressure-Laminat (HPL) oder ein Continuous-Pressure-Laminat (CPL) oder eine Kunststoff- oder Metallschicht. Darauf kann eine dekorative Schicht wie z. B. eine Farb- oder Lackschicht, ein Dekorpapier, eine Kunstharz-Beschichtung oder dergleichen aufgebracht sein. Typisch ist auch ein Kork-Produkt, das auf einer ersten Seite mit einer Lage eines Materials und auf einer zweiten Seite mit mehr als einer Lage eines anderen Materials beschichtet ist. Das Erhöhen der mechanischen Festigkeit steigert insbesondere die Eignung, als Brandschutzmaterial eingesetzt zu werden; die erhöhte Festigkeit wirkt sich insbesondere beim Pyrotechnik-Test positiv aus, wenn pyrotechnische Partikel auf die Oberfläche der zu testenden Platte abgefeuert werden.

Das Kork-Produkt kann nach einer weiter bevorzugten Ausführung mit Schichten verschiedenen Materials beschichtet sein, z. B. mit einem ersten Material auf einer ersten Seite und mit einem zweiten Material auf einer zweiten Seite. Wenn der mehrschichtige Gegenstand gleichzeitig mit dem Korkprodukt hergestellt wird, so kann dies mit den gleichen Pressbedingungen (Temperatur, Zeit, Druck) geschehen wie vorstehend für das Korkprodukt beschrieben.

Nach einer vorteilhaften Ausführung des erfindungsgemäßen Verfahrens kann für den mehrschichtigen Gegenstand, der ein Kork-Produkt aufweist, mindestens eine Material-Schicht verarbeitet werden aus einer Gruppe, die Schichten aus Metall, Keramik, Glas, mineralischen Werkstoffen, Holz, Holzwerkstoffe, Kunststoff und Verbundwerkstoffe wie HPL und CPL umfasst. Typische Beschichtungsmaterialien sind Folien aus Kunststoff, Metall oder Verbundwerkstoffen, Papier, Vliese aus anorganischen oder organischen Fasern, z. B. aus Glas- oder Mineralfasern, Cellulosefasern, Metall- oder Kohlenstofffasern, Platten aus Metall, Kunststoff, Holz, z. B. Furnier, Holzwerkstoffen, z. B. Span- oder Faserplatten, mineralischen Werkstoffen wie Gipskarton-, Zement- oder Mineralfaserplatten, oder Verbundwerkstoffen wie faserverstärkten Kunststoffen, Schichtstoffe wie HPL oder CPL. Die Materialschicht oder -schichten werden mit dem Kork-Produkt beispielsweise während des Pressens verbunden, z. B. indem sich die Werkstoffe mechanisch ineinander fügen. Alternativ können die Werkstoffe miteinander verklebt werden, während des Pressens oder danach. Ggf. wird die Oberfläche des Kork-Produkts oder der Materialschicht mit einem Primer beschichtet, der das Verkleben der Werkstoffe ermöglicht oder vereinfacht. Zum Verbinden der Schichten können thermoplastische Klebstoffe wie z. B. Duroplasten (Phenolharze, Melamin-Formaldehydharze, Harnstoff-Formaldehydharze), Epoxidharze, Polyesterharze oder Polyurethan-Klebstoffe

Insbesondere dann, wenn das Kork-Produkt oder der mehrschichtige Gegenstand, insbesondere als Brandschutzmaterial, das ein Kork-Produkt aufweist, mindestens abschnittsweise mit Flammschutzmitteln versehen ist, z. B. mit anorganischen Flammschutzmitteln wie Aluminiumhydroxid, Aluminiumsulfat, Borax bzw. Borsäure, Magnesiumhydroxid, Blähgraphit bzw. blähbarer Graphit, Ammoniumverbindungen wie Ammoniumsulfat oder Ammoniumphosphat oder -polyphosphat oder Zinkborate, aber auch organische Flammschutzmittel wie Vinylphosphonsäure, Tris(chloroethyl)phosphat, Tris(chloropropyl)phosphat, Tris(dichloroisopropyl)phosphat, Triphenylphosphat oder Tris(2-ethylhexyl)phosphat, werden die flammhemmenden bzw. brandschützenden Eigenschaften des Kork-Produkts bzw. des Brandschutzmaterials verbessert. Eingesetzt werden meist 1 Gew.-% bis 10 Gew.-% der Flammschutzmittel, jeweils bezogen auf das Gesamtgewicht des Korkprodukts oder des mehrschichtigen Gegenstands, wobei das Flammschutzmittel bevorzugt in oder auf den Außenschichten bzw. Außenseiten des Korkprodukts oder des mehrschichtigen Gegenstands eingesetzt wird.

Die Erfindung umfasst weiter ein Kork-Produkt, aufweisend eine Dichte von mindestens 1.050 kg/m³, vorzugsweise als plattenförmiges oder dreidimensionales Kork-Produkt. Ein solches Kork-Produkt, meist plattenförmig oder als dreidimensional geformter Gegenstand, ist thermisch isolierend. Wenn das Kork-Produkt in ein Brandschutzmaterial eingebunden ist, ist es brandbeständig nach den vorstehend erläuterten Gasbrenner- und Pyrotechnik-Tests. Während Brandschutzmaterialien, die Kork-Produkte niedrigerer Dichte aufweisen, diesen Tests nicht standhalten, hat sich überraschenderweise herausgestellt, dass ein Brandschutzmaterial, dass das erfindungsgemäße Kork-Produkt aufweist, diesen Tests standhält. Das erfindungsgemäße Kork-Produkt, insbesondere, wenn es in ein Brandschutzmaterial integriert ist, ist damit insbesondere geeignet für thermisch isolierende Konstruktionen, z. B. Gehäuse oder Schutzwände bzw. Abdeckungen, die auch extremen Brandfällen standhalten, z. B. einer brennenden elektrischen Batterie. Das Kork-Produkt kann ansonsten als thermisch isolierendes Material eingesetzt werden, z. B. um gegen Kälte oder Hitze zu isolieren. Damit ist das erfindungsgemäße Korkprodukt insbesondere in Fahrzeugen wie Kraftfahrzeugen, Schiffen und Flugzeugen einsetzbar, um elektrische Batterien abzuschirmen, so dass im Brandfall der Brand eingedämmt und dessen Ausbreitung bzw. Übergreifen auf das Fahrzeug verhindert wird. Das erfindungsgemäße Kork-Produkt weist zwar eine für Kork außergewöhnlich hohe Dichte auf. Dafür kann es aber in außerordentlich geringer Schichtdicke eingesetzt werden. Es ist also insbesondere unter räumlich beengten Verhältnissen, wie sie für Fahrzeuge typisch sind, gut als thermisch isolierendes Material geeignet.

Die vorstehend geschilderten Eigenschaften der thermischen Isolierung und -sofern das Kork-Produkt in ein Brandschutzmaterial eingebunden ist, der Brandbeständigkeit werden nach einer bevorzugten Ausführung weiter verbessert, wenn das Kork-Produkt in einen mehrschichtigen Gegenstand eingebunden ist, der mindestens eine weitere Material-Schicht aufweist aus einer Gruppe, die Schichten aus Metall, Keramik, Glas, mineralischen Werkstoffe, Holz, Holzwerkstoffe, Kunststoff und Verbundwerkstoffe wie HPL und CPL umfasst. Wie vorstehend bereits erläutert, verbessert eine weitere Material-Schicht entweder die mechanische Festigkeit bzw. Gebrauchstüchtigkeit des Kork-Produkts oder dessen dekorative Eigenschaft. Insbesondere eine Kombination mit einer Schicht aus Glas- oder Mineralfaser, einer Metallfolie, einem HPL oder CPL oder einem Furnier bzw. einer Holzwerkstoffplatte ist geeignet, die mechanische Festigkeit und damit die Gebrauchstüchtigkeit des Kork-Produkts zu verbessern. Die vorstehend beschriebenen Schichten bilden im Verbund mit dem Kork-Produkt in der Regel Brandschutzmaterialien, die die vorstehend beschriebenen Tests bestehen. Hat die weitere Material-Schicht eine dekorative Oberfläche, wie z. B. ein Furnier oder ein HPL oder ein CPL mit dekorativer Oberfläche, wird zugleich mit den Festigkeitseigenschaften auch die dekorative Eigenschaft des Kork-Produkts. Wird als weitere Material-Schicht ein brandbeständiges Material eingesetzt, z. B. eine Metallfolie oder ein Metallblech oder eine Schicht aus Glas- oder Mineralfaser, wird zudem auch die Brandbeständigkeit des mehrschichtigen Gegenstands weiter gesteigert.

Nach einer weiter bevorzugten Ausführung der Erfindung weist der mehrschichtige Gegenstand das Kork-Produkt als Mittellage auf, wobei die Mittellage auf jeder Seite umgeben ist von mindestens einer Außenlage aus einer weiteren Material-Schicht. Bei dieser Ausführung ist die thermisch isolierende Eigenschaft des Kork-Produkts in vollem Umfang verfügbar, aber gleichzeitig ist die Oberfläche des Kork-Produkts gegen mechanische Einflüsse geschützt und ggf. dekorativ gestaltet. Sie eignet sich damit insbesondere als brandbeständiges Material. Ein symmetrischer Aufbau des mehrschichtigen Gegenstands vereinfacht zudem dessen Handhabung, da nicht mehr auf die Ausrichtung des mehrschichtigen Gegenstands geachtet werden muss.

Zur Optimierung von Brandbeständigkeit und Gewicht weist eine besonders bevorzugte Ausführung des mehrschichtigen Gegenstands eine Mittellage aus einem Kork-Produkt auf, die auf jeder Seite umgeben ist von einer außenliegenden Schicht aus Mineral- oder Glasfaser-Material. Insbesondere dann, wenn ein dreidimensionaler Gegenstand hergestellt werden soll, kann diese vorteilhaft Ausführung weiter verbessert werden, indem auf einer oder beiden Seiten des mehrschichtigen Gegenstands ein Furnier zwischen Kork-Produkt und Glasfaser- oder Mineralmaterial angeordnet wird. Beim Verformen des mehrschichtigen Gegenstands, z. B. zu einem Gehäuse oder einem Bauteil mit dreidimensionaler Gestaltung, ermöglichen die Fasern des Furniers einen verbesserten Zusammenhalt des mehrschichtigen Gegenstands während und nach der Verformung. Alternativ kann ein Brandschutzmaterial mit einer Mittellage aus einem Kork-Produkt und Außenlagen aus Holz oder Holzwerkstoff, bevorzugt mit Flammschutzmitteln imprägniertem Holz oder Holzwerkstoff hergestellt werden, z. B. mit Außenlagen aus Furnier, Sperrholz, Faser- oder Spanplatten. Die Herstellung eines Brandschutzmaterials kann ebenfalls hergestellt werden, wenn HPL oder CPL als Außenlage eine Schicht aus dem Kork-Produkt abschließen, insbesondere wenn das HPL- oder CPL-Material flammhemmend imprägniert ist.

Das erfindungsgemäße Kork-Produkt weist eine Dicke von 1 mm bis 80 mm, insbesondere 2 mm bis 20 mm auf. Die Dicke des Kork-Produkts ist nur begrenzt durch die Leistung der Presse, in der es hergestellt wird. Besonders bevorzugt wird ein Kork-Produkt mit einer Dicke von bis zu 5 mm. Es hat sich überraschend herausgestellt, dass schon ein besonders dünnes Kork-Produkt mit einer Dicke von maximal 5 mm, vorteilhaft von 2 mm oder 3 mm Dicke die gewünschte thermische Isolierung gewährleistet, insbesondere, wenn dieses dünne Kork-Produkt in einen mehrschichtigen Gegenstand eingebunden ist. Es ist als besonderer Vorteil anzusehen, dass nur eine geringe Dicke des Kork-Produkts erforderlich ist, um z. B. in einem Brandschutzmaterial eine außerordentlich hohe thermische Isolierung und Brandbeständigkeit zu erreichen, weil dadurch das insgesamt erforderliche Gewicht des Kork-Produkts bzw. des Brandschutzmaterials gering gehalten werden kann.

Das erfindungsgemäße Kork-Produkt wird vorteilhaft zur thermischen und akustischen Isolierung, als Brandschutz-Material, für Konstruktionszwecke im Fahrzeugbau und zum Innenausbau, insbesondere von Fahrzeugen verwendet. Nach einer weiter vorteilhaften Ausführung wird das Kork-Produkt in einem mehrschichtigen Gegenstand für die vorgenannten Einsatzzwecke, insbesondere als Brandschutzmaterial verwendet.

Details der Erfindung werden nachstehend an Ausführungsbeispielen erläutert. Es zeigen:
- Fig. 1: ein Ausführungsbeispiel des Kork-Produkts
- Fig. 2: ein Ausführungsbeispiel eines mehrschichtigen Gegenstands
- Fig. 3: ein Ausführungsbeispiel eines dreidimensionalen Kork-Produkts

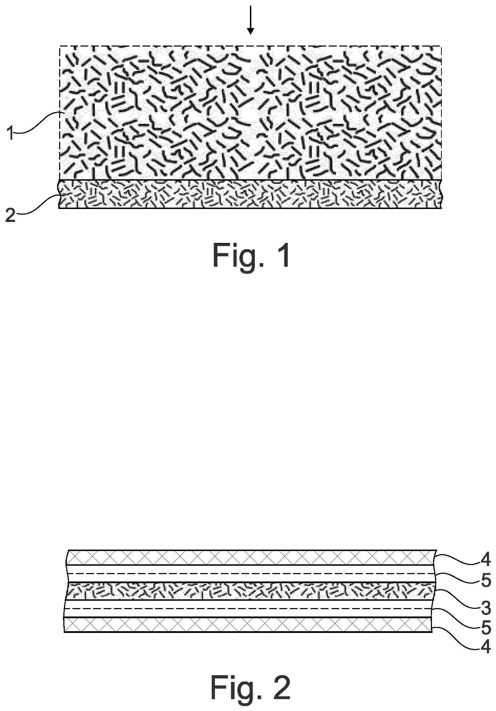

Fig. 1 zeigt ein Ausführungsbeispiel des Kork-Produkts 1 mit einer Dichte von 1.050 kg/m³ bis 1.700 kg/m³, bevorzugt von 1.200 kg/m³ bis 1.500 kg/m³. Das Kork-Produkt 1 ist hier als Platte mit einer Dicke von 3 mm hergestellt worden. Die Herstellung erfolgt durch Schütten oder Streuen einer Kork-Schicht 2 von Kork-Partikeln, z. B. Kork-Granulat, mit einer Dichte von ca. 280 kg/m³ bis 420 kg/m³ auf einen hier nicht dargestellten Träger, der in eine Presse überführt wird. Die Kork-Partikel sind mit einem Anteil von 10 Gew.-% Bindemittel, z. B. Melamin-Formaldehydharz, versehen. Alternativ kann als Kork-Schicht 2 eine vorgefertigte Kork-Platte mit einer Dichte von 280 kg/m³ bis 420 kg/m³ eingesetzt werden. In der Presse wird die Kork-Schicht 2 um mindestens 50%, hier um ca. 85% komprimiert. Die Presse kann so eingestellt werden, dass ein Komprimieren der Kork-Schicht 2 stufenlos auf Werte zwischen 50% und 85% eingestellt werden kann. Die Dicke des Kork-Produkts 1 kann von 1 mm bis 80 mm betragen, liegt aber bevorzugt in einem Bereich von bis zu 20 mm, besonders bevorzugt bei bis zu 5 mm. Für viele technische Anwendungen beträgt die Dicke des Kork-Produkts 2 mm oder 3 mm.

Das Pressen erfolgt meist bei erhöhter Temperatur, bevorzugt bei einer Temperatur von über 100 °C, besonders bevorzugt von über 150 °C. Vorliegend wurde bei einer Temperatur in einem Bereich von 150 °C bis 180 °C gearbeitet. Die Temperatur sollte nicht höher liegen als die Temperatur, bei der sich Kork thermisch zersetzt.

Die Presse wirkt mit einem Druck von mindestens 120 bar, bevorzugt mindestens 150 bar auf die Kork-Schicht ein. Vorteilhaft wirkt die Presse mit einem Druck von 150 bis 180 bar auf die Kork-Schicht ein. Die Obergrenze des anwendbaren Drucks wird durch die Leistung der Presse bestimmt.

Die Pressdauer beträgt mindestens 8 Minuten, bevorzugt mindestens 10 Minuten. Vorteilhaft wirkt die Presse 10 bis 15 Minuten bei maximalem Pressdruck auf die Kork-Schicht ein, um das Kork-Produkt zu erzeugen. Ein Presszyklus, der das Einfahren des Trägers mit der Kork-Schicht 2 in die Presse, das Schließen der Presse, das Aufbauen des maximalen Pressdrucks und ggf. das Abkühlen des Kork-Produkts sowie das Öffnen der Presse und Ausfahren des Trägers mit dem Kork-Produkt 1 umfasst, dauert meist zwischen 15 min und 30 min.

Nach einer bevorzugten Ausführung des Verfahrens wird auf dem Träger der Presse neben der Kork-Schicht mindestens eine weitere Material-Schicht aufgebracht, die aus einer Gruppe gewählt wird, die Schichten aus Metall, Keramik, Glas, mineralischen Werkstoffe, Holz, Holzwerkstoffe, Kunststoff und Verbundwerkstoffe wie HPL und CPL umfasst. Typische Beschichtungsmaterialien sind Folien aus Kunststoff, Metall oder Verbundwerkstoffen wie folienbeschichtetes Vlies, Papier, Vliese aus anorganischen oder organischen Fasern, z. B. aus Glas- oder Mineralfasern, Cellulosefasern, Metall- oder Kohlenstofffasern, Furnier, Platten aus Metall, Kunststoff, Holz, z. B. Furnier, Holzwerkstoffen, z. B. Span- oder Faserplatten, mineralischen Werkstoffen wie Gipskarton-, Zement- oder Mineralfaserplatten, oder Verbundwerkstoffen wie faserverstärkten Kunststoffen, Schichtstoffe wie HPL oder CPL. Eine bevorzugte Kombination von Schichten für ein Brandschutzmaterial weist eine äußere Lage von Glas- oder Mineralfaser, eine Lage Furnier und eine Mittellage aus Kork-Produkt auf, die zweite Außenseite des Kork-Produkt ist ebenfalls mit einer Lage aus Glas- oder Mineralfaser beschichtet, optional kann ein Furnier zwischen Kork-Produkt und der äußeren Lage von Glas- oder Mineralfaser angeordnet sein.

Die einzelne Materialschicht oder zwei oder mehr Materialschichten werden mit dem Kork-Produkt nach einer ersten Alternative während des Pressens verbunden, z. B. indem sich die Werkstoffe mechanisch ineinanderfügen. Zu diesem Zweck wird oder werden die Materialschichten vor und/oder nach der Kork-Schicht auf den Träger aufgebracht und zu einem mehrschichtigen Gegenstand verpresst.

Alternativ können die Werkstoffe miteinander verklebt werden, während des Pressens oder danach. Wird während des Pressens verklebt, kann nach dem Aufbringen einer Schicht und vor dem Aufbringen der nachfolgenden Schicht ein Klebstoff aufgetragen werden. Ggf. wird die Oberfläche des Kork-Produkts oder der zu verklebenden Materialschicht mit einem Primer beschichtet, der das Verkleben der Werkstoffe ermöglicht oder vereinfacht. Klebstoff bzw. Primer können z. B. durch Sprühen, Gießen oder Walzen aufgebracht werden. Typische Klebstoffe umfassen Kunstharze, insbesondere Duroplaste wie Melamin-Formaldehydharz, Phenolharz, Harnstoff-Formaldehydharz oder eine Mischung von zwei oder mehr dieser Harze, aber auch Epoxidharze oder Polyesterharze sind geeignet.

Wie vorstehend bereits erläutert, verbessert eine weitere Material-Schicht entweder die mechanische Festigkeit bzw. Gebrauchstüchtigkeit des Kork-Produkts oder dessen dekorative Eigenschaft. Bevorzugt kann das Kork-Produkt durch Beschichtung zu einem Brandschutzmaterial ertüchtigt werden.

Insbesondere die in Fig. 2 dargestellte Ausführung eines mehrschichtigen Gegenstands 6, die eine Kombination eines Kork-Produkts als Mittellage 3 mit jeweils einer Schicht aus Glas- oder Mineralfaser als Außenlage 4 aufweist, ist geeignet, die mechanische Festigkeit und damit die Gebrauchstüchtigkeit des Kork-Produkts zu verbessern. Die in Fig. 2 ebenfalls durch eine gestrichelte Linie angedeutete Schicht 5 aus Furnier, die jeweils zwischen dem Kork-Produkt 2 und der Außenlage 4 angeordnet ist, ist optional. Die Schicht 5 kann zudem ein- oder beidseitig wie in Fig. 2 gezeigt, eingesetzt werden.

Alternativ oder in Kombination mit der Glasfaser- oder Mineralfaserschicht können entweder als außen liegende Schicht oder als Schicht zwischen den Glas- oder Mineralfasern und dem Kork-Produkt eine Metallfolie, z. B. aus Aluminium oder Kupfer, ein HPL oder ein CPL, ein Furnier, eine Holzwerkstoffplatte wie z. B. eine Spanplatte, ein Oriented Strand Board oder eine Faserplatte wie eine hochdichte oder mitteldichte Faserplatte als weitere Schicht oder Außenlage 4 eines mehrschichtigen Gegenstands verwendet werden. Weiter können auch mineralische Werkstoffe wie Gipskarton oder Zementfaserplatten eingesetzt werden. Hat die weitere Material-Schicht eine dekorative Oberfläche, wie z. B. ein Furnier oder ein HPL oder ein CPL mit dekorativer Oberfläche, wird zugleich mit den Festigkeitseigenschaften auch die dekorative Eigenschaft des Kork-Produkts verbessert. Wird als weitere Material-Schicht, insbesondere Außenlage, ein brandbeständiges Material eingesetzt, z. B. eine Metallfolie oder ein Metallblech oder eine Schicht aus Glas- oder Mineralfaser, wird die Brandbeständigkeit des mehrschichtigen Gegenstands weiter gesteigert. Die Brandbeständigkeit des mehrschichtigen Gegenstands kann auch dadurch erreicht oder gesteigert werden, dass die jeweils in dem mehrschichtigen Gegenstand verwendeten Werkstoffe mit flammhemmenden Mitteln beschichtet oder imprägniert werden.

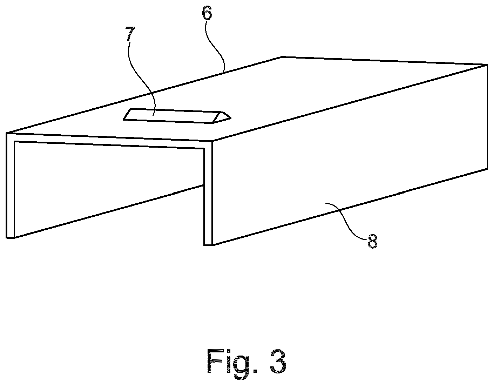

Neben dem Herstellen eines Kork-Produkts 2 als Platte kann das Kork-Produkt 1 auch als dreidimensionaler Gegenstand, wie z. B. in Fig. 3 gezeigt, hergestellt werden, entweder durch Pressen einer Kork-Schicht in einer Form, die dem Negativ des dreidimensionalen Gegenstands entspricht oder durch nachträgliches Verformen einer Platte des Kork-Produkts, insbesondere dann, wenn die dreidimensionale Verformung nur gering ist. Dabei kann das Kork-Produkt, beispielsweise während des Komprimierens, um das 3-fache der End-Dicke des Kork-Produkts aus der Ebene des plattenförmigen Kork-Produkts heraus verformt werden. Die Form, in der das Kork-Produkt 2 komprimiert wird, wird dabei eingesetzt wie beim Tiefziehen. Auf diese Weise können Verformungen wie z. B. Sicken 7 oder Rastnasen in der Fläche des Kork-Produkts 2 erzeugt werden. Ergänzend oder alternativ können Randflächen wie beispielsweise Wandabschnitte 8 aus der Ebene des Kork-Produkts 2 heraus geformt werden. Optional können die Stabilität und mechanische Festigkeit des Kork-Produkts 2 verbessert werden, indem das Kork-Produkt 2 mit mindestens einer weiteren Material-Schicht verbunden wird. Typische weitere Materialien sind vorstehend genannt. Um die Verbesserung der mechanischen Festigkeit mit einer weiteren Optimierung von thermischer Isolierung und Brandbeständigkeit zu kombinieren, haben sich insbesondere Schichten aus Glas- oder Mineralfasern, Metallfolien oder mineralischen Werkstoffen, insbesondere Zementfaserplatten, bewährt. Die mechanische Festigkeit des Kork-Produkts 2 wird insbesondere dann verbessert, wenn mindestens eine weitere Material-Schicht aus einer Folie oder einem faserhaltigen Material verwendet wird, wie beispielsweise einem Furnier, einer Faserplatte, Glas- oder Mineralfasern, die z. B. als Vlies eingesetzt werden können. Wenn die vorgenannten Werkstoffe biegsam sind, wie z. B. Vliese oder Furnier, dann kann auch ein mehrschichtiger Gegenstand so verformt werden, wie es vorstehend für das Kork-Produkt 2 beschrieben wurde.

Es ist als besonderer Vorteil des erfindungsgemäßen Kork-Produkts 2 anzusehen, dass ein sehr dünnes Produkt von bis zu 5 mm Dicke ausgezeichnete thermisch isolierende Eigenschaften aufweist.

So hat z. B. ein mehrschichtiges Produkt mit einer Mittellage 3 aus einem erfindungsgemäßen Kork-Produkt mit einer Dichte von 1.600 kg/m³ und einer Dicke von 3 mm, das beidseits mit einem Fiberglas-Gelege von 1,7 mm Dicke versehen war den Gasbrenner-Test bestanden. Das vorstehend beschriebene, mehrschichtige Produkt, das für die Prüfung in einem Referenzrahmen aus einer Aluminiumlegierung eingespannt war, hat der Flamme eines Gasbrenners mit einer Temperatur von 1.200 °C für mehr als 10 Minuten widerstanden, ohne dass die Temperatur auf der dem Gasbrenner abgewandten Seite 300 °C überstiegen hat. Selbst nach Einwirken des Gasbrenners für 20 Minuten wurde die Temperatur von 300 °C nicht überschritten. Dieser Versuch wurde fünf Mal wiederholt, stets mit demselben Ergebnis. Das Ergebnis ist für eine Platte von weniger als 6,5 mm Dicke außergewöhnlich.

Ein mehrschichtiger Gegenstand mit einer Mittellage 3 aus einem Kork-Produkt mit einer Dichte von 1.600 kg/m³ und einer Dicke von 3 mm, einer einseitig aufgebrachten Zwischenlage aus Furnier mit 1,8 mm Dicke und zwei Außenlagen aus 2,5 mm dickem Fiberglas-Gewebe wurde dem Pyrotechnik-Test unterzogen und hat diesen bestanden, ohne dass die Temperatur auf der Rückseite des mehrschichtigen Gegenstands 300 °C übersteigt. Während des 20 Sekunden dauernden Tests, in dem der pyrotechnische Gegenstand aus einem Abstand von 30 mm die Oberfläche des mehrschichtigen Gegenstands mit pyrotechnischen Partikeln bombardiert, ist der mehrschichtige Gegenstand trotz einer Dicke von unter 10 mm nicht durchgebrannt, sondern hat dem Bombardement gut standgehalten. Dies gilt für alle vier Versuche, die mit dem beschriebenen, mehrschichtigen Gegenstand durchgeführt wurden.

Damit sind die beiden mehrschichtigen Gegenstände beispielsweise geeignet als Gehäuse oder Abdeckung für elektrische Batterien in Fahrzeugen wie PKW, LKW, Bussen, Schiffen, Schienenfahrzeugen oder Flugzeugen. Gleichzeitig eignen sie sich als Konstruktionsplatten, z. B. im Innenausbau von Fahrzeugen, Schiffen und Flugzeugen. Typische Anwendungen sind Kabinenausbauten, Türen oder Trennwände mit Brandschutz-Funktion und dergleichen.

Insbesondere dort, wo aus Gründen des Brandschutzes eine möglichst enge Einhausung gefordert ist, können dreidimensionale mehrschichtige Gegenstände hergestellt werden, die optimal z.B. an einzuhausende elektrische Batterien angepasst sind. Typische Verwendungszwecke sind weiter auch konstruktive Einbauten in Gebäuden oder für Behälter von Akkus oder anderen brandauslösenden bzw. leicht entzündlichen Gegenständen, z. B. Gehäuse, in denen Akkus geladen werden.

### Bezugszeichenliste

- 1: Kork-Schicht
- 2: Kork-Produkt
- 3: Mittellage
- 4: Außenlage
- 5: weitere Schicht
- 6: mehrschichtiger Gegenstand
- 7: Sicke
- 8: Wandabschnitte

## Patentansprüche

1. Verfahren zum Herstellen eines Kork-Produkts (2) mit einer Dichte von mindestens 1.050 kg/m³ durch Komprimieren des Korks um mindestens 50% bezogen auf das Ausgangsvolumen.

2. Verfahren nach Anspruch 1, wobei der Kork um mindestens 60% bis 85% bezogen auf das Ausgangsvolumen komprimiert wird, bevorzugt um mindestens 65% bis 80%.

3. Verfahren nach Anspruch 1 oder 2, wobei der Kork auf eine Dichte von mindestens 1.100 kg/m³ bis 1.700 kg/m³ komprimiert wird, bevorzugt auf eine Dichte von 1.200 kg/m³ bis 1.500 kg/m³.

4. Verfahren nach einem der vorangehenden Ansprüche, **dadurch gekennzeichnet, dass** das Komprimieren durch Pressen bei mindestens 120 bar, insbesondere bei mindestens 150 bar erfolgt.

5. Verfahren nach einem der vorangehenden Ansprüche, **dadurch gekennzeichnet, dass** das Komprimieren bei einer Temperatur von über 100 °C, insbesondere von mindestens 150 °C erfolgt.

6. Verfahren nach einem der vorangehenden Ansprüche, **dadurch gekennzeichnet, dass** das Komprimieren über einen Zeitraum von mindestens 8 Minuten, insbesondere von mindestens 10 Minuten erfolgt.

7. Verfahren nach einem der vorangehenden Ansprüche, **dadurch gekennzeichnet, dass** durch das Komprimieren ein plattenförmiges und/oder ein dreidimensionales Kork-Produkt (2) hergestellt wird.

8. Verfahren nach einem der vorangehenden Ansprüche, **dadurch gekennzeichnet, dass** durch das Komprimieren oder nach dem Komprimieren ein mehrschichtiger Gegenstand (6) hergestellt wird, der ein Kork-Produkt (2) aufweist.

9. Verfahren nach Anspruch 8, **dadurch gekennzeichnet, dass** für den mehrschichtigen Gegenstand mindestens eine Material-Schicht (4, 5) verarbeitet wird aus einer Gruppe, die Schichten aus Metall, Keramik, Glas, mineralischen Werkstoffen, Holz, Holzwerkstoffe, Kunststoff und Verbundwerkstoffe wie HPL und CPL umfasst.

10. Kork-Produkt, aufweisend eine Dichte von mindestens 1.050 kg/m³, vorzugsweise als plattenförmiges oder dreidimensionales Kork-Produkt (2).

11. Kork-Produkt nach Anspruch 10, **dadurch gekennzeichnet, dass** das Kork-Produkt (2) in einen mehrschichtigen Gegenstand (6) eingebunden ist, der mindestens eine weitere Material-Schicht (4, 5) aufweist aus einer Gruppe, die Schichten aus Metall, Keramik, Glas, mineralischen Werkstoffen, Holz, Holzwerkstoffe, Kunststoff und Verbundwerkstoffe wie HPL und CPL umfasst.

12. Kork-Produkt nach Anspruch 11, **dadurch gekennzeichnet, dass** der mehrschichtige Gegenstand (6) das Kork-Produkt (2) als Mittellage (3) aufweist, wobei die Mittellage auf jeder Seite umgeben ist von mindestens einer Außenlage (4) aus einer weiteren Material-Schicht.

13. Kork-Produkt nach Anspruch 11, **dadurch gekennzeichnet, dass** eine Mittellage (3) aus einem Kork-Produkt auf jeder Seite umgeben ist von einer Schicht (4) aus Mineral- oder Glasfaser-Material.

14. Kork-Produkt nach einem der Ansprüche 10 bis 13, **dadurch gekennzeichnet, dass** das Kork-Produkt (2) eine Dicke von 1 mm bis 80 mm, insbesondere 2 mm bis 20 mm aufweist.

15. Verwendung des Kork-Produkts (2) nach einem der Ansprüche 10 bis 12, insbesondere in einem mehrschichtigen Gegenstand (6), zur thermischen und akustischen Isolierung, als Brandschutz-Produkt, für Konstruktionszwecke im Fahrzeugbau und zum Innenausbau, insbesondere von Fahrzeugen.
